# EUROPÄISCHE PATENTSCHRIFT

(11) **EP 0 573 870 B1**
(45) Veröffentlichungstag und Bekanntmachung des Hinweises auf die Patenterteilung: **01.05.1996**
(21) Anmeldenummer: 93108743.1
(22) Anmeldetag: 01.06.1993
(51) Int. Cl.: C08F 210/02, C08F 2/00

(54) **Verfahren zur Herstellung von Copolymerisaten des Ethylens mit Acrylsäureestern**
Process for the manufacture of copolymers of ethylene and acrylic acid esters
Procédé de préparation de copolymères de l'éthylène et d'esters d'acide acrylique

(30) Priorität: 11.06.1992 DE 4219129
(43) Veröffentlichungstag der Anmeldung: 15.12.1993
(73) Patentinhaber: BASF Aktiengesellschaft, D-67063 Ludwigshafen (DE)
(72) Erfinder: Pfleger, Klaus, Dr., W-5047 Wesseling (DE); Arnold, Gerhard, W-5047 Wesseling (DE); Schiller, Siegfried, W-5040 Bruehl (DE); Mueller, Herbert, W-5040 Bruehl (DE)

(56) Entgegenhaltungen:
- DE-A- 2 617 411
- DE-B- 1 177 344
- US-A- 3 254 071

## Beschreibung

Die Erfindung betrifft ein Verfahren zur Herstellung von Copolymerisaten des Ethylens mit Acrylsäureestern durch Copolymerisation von 100 Gewichtsteilen Ethylen mit 0,1 bis 25,0 Gewichtsteilen Acrylsäureestern in einem kontinuierlich betriebenen, rohrförmigen Polymerisationssystems bei Drücken von 500 bis 4000 bar und Temperaturen von 100 bis 400°C in Gegenwart von radikalisch zerfallenden Polymerisationsinitiatoren.

Die bei obiger Polymerisation entstehenden Ethylen-Acrylsäureester-Copolymerisate - im weiteren Copolymerisate genannt - werden beispielsweise als Folienmaterial, Kabelummantelungen bzw. Klebstoffe verwendet.

Das Verfahren zur Herstellung der Copolymerisate erfolgt in Rohrreaktoren, die beispielsweise in "Ullmann's Encyclopädie der technischen Chemie", 4. Auflage, Band 19, Seiten 173-175 beschrieben sind.

Der Ausdruck Ethylen-Acrylsäureester-Copolymerisate umfaßt Copolymerisate mit Gehalten an einpolymerisiertem Comonomerenanteil von 0,1 bis 25,0, bevorzugt 0,5 bis 20,0 Gew.-%, die einen Schmelzindex von 0,1 bis 25 g/10 min., bestimmt nach ASTM-D 1238-65 T bei einer Temperatur von 190°C und einem Auflagegewicht von 2,16 kg, und eine Dichte von 0,890 bis 0,935 g/cm³, gemessen nach DIN 53 479, aufweisen.

Als Acrylsäureester kommen sämtliche mit Ethylen bei den angegebenen Temperaturen und Druckverhältnissen copolymerisierbaren Acrylsäureester in Betracht. Solche Comonomere sind z.B. Ester der Acryl- und Methacrylsäure mit C₁- bis C₈-, vorzugsweise C₁- bis C₆-Alkanolen. Insbesondere bevorzugt sind Methyl-, n-Butyl- und tert.-Butylacrylat. Es ist auch möglich, Gemische von Acrylsäureestern einzusetzen.

Das Ethylen wird mit den Acrylsäureestern in Gegenwart radikalischer Polymerisationsinitiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol-ppm, bezogen auf das zu polymerisierende Ethylen. In Betracht kommen außerdem Peroxide und andere Radikalbildner sowie Gemische von Peroxiden sowie Mischungen aus Sauerstoff und Peroxiden und/oder Hydroperoxiden.

Als Beispiele für Peroxide und Hydroperoxide seien genannt: tert.-Butylperoxypivalat, Di-tert.-butylperoxid, tert.-Butylhydroperoxid, tert.-Butylperbenzoat, p-Menthanhydroperoxid und Di-lauroylperoxid. Unter radikalischen Polymerisationsinitiatoren sollen auch Verbindungen wie Azo-isobuttersäuredinitril verstanden werden. Man kann auch Mischungen aus Sauerstoff und einem oder mehreren Peroxiden verwenden. Bevorzugt wird die Copolymerisation des Ethylens mit Acrylsäureestern durch Luftsauerstoff initiiert.

Üblicherweise arbeitet man in Gegenwart von Polymerisationsreglern. Mit Hilfe der Polymerisationsregler ist es möglich, den Schmelzindex der entstehenden Ethylen-Copolymerisate einzustellen. Als Regler eignen sich beispielsweise Wasserstoff, Ketone, Aldehyde, Alkohole, Ether oder normale und verzweigte- Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Mol-%, bezogen auf das zu polymerisierende Ethylen, eingesetzt. In einer besonderen Ausgestaltung des Verfahrens arbeitet man ohne zusätzliche Polymerisationsregler, wenn die eingesetzten Comonomere selbst als Regler dienen oder wenn sich bei der Copolymerisation Stoffe bilden, die Reglereigenschaften besitzen.

Die Copolymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die als Polymerisationsinitiatoren verwendeten Peroxide gelöst werden, können gegenüber den anderen Einsatzstoffe vernachlässigt werden.

Wird mit Sauerstoff als Polymerisationsinitiator gearbeitet, dann kann jegliches Lösungsmittel entfallen.

Die Herstellung der vorab beschriebenen Copolymerisate ist bekannt und in der Patent-Literatur beschrieben.

In der französischen Patentschrift 1 596 991 wird bei der Herstellung von Copolymeren des Ethylens mit Acrylsäureestern die Temperatur im Reaktor so hoch gewählt, daß die sekundären und tertiären Estergruppen im Polymerisat teilweise oder vollständig pyrolysieren, wobei unter Abspaltung eines Alkens freie Carbonsäuregruppen im Copolymeren erhalten werden.

Weitere Verfahren wie beispielsweise in den nachstehenden englischen Patentschriften 1 010 847, 915 210 und 1 347 361 beschrieben, zielen auf eine Erhöhung des Umsatzes von Ethylen zu Polyethylen pro Durchsatz ab.

Bei den bekannten Verfahren kommt es im Produktionsprozeß, vor allem mit zunehmender Betriebszeit, zu Störungen, die aus Schwankungen der Reaktionstemperaturen resultieren. Beginnend vom Anfang der Reaktionszone pflanzen sich die Temperaturschwankungen schubweise über die gesamte Reaktionszone fort. Im Extremfall sind als Folge der Instabilität sehr heftige Zersetzungen des Reaktionsgemisches beobachtet worden.

Der vorliegenden Erfindung lag daher die Aufgabe zugrunde, die Reaktionsführung der Copolymerisation des Ethylens mit Acrylsäureester in Rohrreaktoren so stabil zu gestalten, daß die genannten Störungen wirkungsvoll beseitigt und Zersetzungen des Reaktionsgemisches ausgeschlossen werden.

Die Aufgabe wird erfindungsgemäß dadurch gelöst, daß die Temperaturführung für das Reaktionsgemisch, bestehend aus Ethylen, Acrylsäureester, Polymerisationsinitiatoren und gegebenenfalls Regler, nach dem Eintritt in die Reaktionszone derart gestaltet wird, daß der Quotient dT/dt (Temperaturanstieg pro Zeiteinheit) bei einem Wert zwischen 1,5 bis 2,5°C pro Sekunde konstant gehalten wird.

Eine bevorzugte Wahl des Quotienten Temperaturanstieg pro Zeiteinheit beträgt 1,6 bis 2,3°C pro Sekunde.

Beim Einsatz von normal-Butylacrylat sollte der Quotient dT/dt im Bereich von 1,6 bis 1,9°C pro Sekunde gehalten werden. Ein Überschreiten des oberen Grenzwertes muß unbedingt vermieden werden, da sonst eine Zersetzung des Reaktionsgemisches schon innerhalb kurzer Zeit eintreten kann.

Bei der Copolymerisation des Ethylens mit tertiär-Butylacrylat kann mit einem etwas höheren Temperaturanstieg der Reaktionsmischung beim Durchlauf durch die ersten Rohre der Reaktionszone gearbeitet werden; in diesem Falle kann der Quotient dT/dt bei Werten zwischen 1,9 und 2,3°C pro Sekunde eingestellt werden. Zweckmäßigerweise arbeitet man bei kürzeren Reaktoren im oberen Bereich der angegebenen Werte, da hierbei maximale Umsätze zu erzielen sind.

Bei längeren Reaktoren ist das zu Umsetzung der Reaktanten verfügbare Volumen ausreichend, so daß zum wirtschaftlichen Betrieb des Reaktors nicht unbedingt an der Obergrenze des Quotienten dT/dt gefahren werden braucht.

In jedem Falle ist jedoch ein Überschreiten des oberen Grenzwertes unbedingt zu vermeiden, da auch hier Zersetzungen des Reaktionsgemisches beobachtet wurden.

Das Verfahren arbeitet hierbei bei Drücken oberhalb von 800 bar, bevorzugt bei einem Druck von 1500 bis 3000 bar, und Temperaturen zwischen 150 und 350°C. Das Reaktionsgemisch erfährt bei seinem Eintritt in die Reaktionszone sogleich eine exakte Temperaturführung derart, daß der Quotient dT/dt - Temperaturanstieg pro Zeiteinheit für das Reaktionsgemisch bei seinem Durchlaufen der ersten zehn Rohre der Reaktionszone - entsprechend der Zusammensetzung der Reaktanten bei einem definierten Wert konstant gehalten und ein oberer Grenzwert des Quotienten nicht überschritten wird.

Die Einstellung der Temperaturführung in den ersten zehn Rohren der Reaktionszone - dies bedeutet je nach Reaktortyp eine Strecke von 100 bis 260 m - erfolgt über die Menge und Temperatur des durch die Kühlmäntel der Reaktionsrohre durchgeleiteten Kühlmediums im Zusammenspiel mit der Konzentration an Polymerisationsinitiator und der Gastemperatur des Reaktionsgemisches am Eingang zur Reaktionszone.

Als Kühlmedium wird in bekannter Weise Druckwasser im Temperaturbereich von 160 bis 200°C verwendet.

In einer bevorzugten Ausgestaltung des erfindungsgemäßen Verfahrens arbeitet man mit einer vom übrigen Heißwasser-Kühlkreislauf getrennten Kühleinrichtung für die Sektion, in der der Quotient dT/dt konstant gehalten werden muß.

Die Gastemperatur des Reaktionsgemisches am Eingang zur Reaktionszone wird auf maximal 175°C begrenzt.

Bei dem erfindungsgemäßen Verfahren zeigte sich überraschenderweise, daß ein bedeutend stabileres Laufverhalten des Reaktors erzielt wurde.

Wenn hingegen ohne exakt definierte Temperaturführung für das Reaktionsgemisch in den ersten Rohren der Reaktionszone gearbeitet wird, treten Temperaturschwankungen bei der Copolymerisation des Ethylens mit normal-Butylacrylat von bis zu 50°C, beim Einsatz von tertiär-Butylacrylat von 10 bis 20°C.

Diese relativ starken Temperaturschwankungen können mit der durch örtliche Überhitzung auftretenden Reaktion der Acrylsäureester mit sich selbst erklärt werden. Die Acrylsäureester reagieren um ein Vielfaches schneller als Ethylen; dabei bilden sich in erster Linie Poly-Acrylate, die sich als hartnäckige Beläge auf den Wänden der Reaktionsrohre festsetzen. Dies führt zu einer Verschlechterung des Wärmeübergangs, wodurch die Instabilität des Reaktionsgeschehens bzw. die Temperaturschwankungen noch anwachsen. Ab einer gewissen Stärke des Wandbelages wird der Wärmeübergang derart ungenügend, daß es zu Zersetzungen des Reaktionsgemisches kommt.

Nach dem erfindungsgemäßen Verfahren treten die genannten Störungen nicht auf; es kommt überraschenderweise nur noch zu geringen Temperaturschwankungen im gesamten Bereich der Reaktionszone. Zu Zersetzungen ist es bei Einhaltung der in den Patentansprüchen 1 bis 3 aufgezeigten Bedingungen nicht gekommen.

### Beispiel 1

In einem Rohrreaktor wurde ein Gemisch, bestehend aus 1000 Gewichtsteilen Ethylen, 32 Gewichtsteilen normal-Butylacrylat und 15 Mol-ppm Sauerstoff, bezogen auf Ethylen, sowie 0,3 Gewichtsteile Propylen als Polymerisationsregler bei einem Druck von 2300 bar copolymerisiert.

Das Reaktionsgemisch wurde mit einer Temperatur von 171°C in die Reaktionszone eingeführt.

Der Temperaturanstieg in den ersten zehn Rohren der Reaktionszone wurde bei einem Wert von dT/dt = 1,8°C pro Sekunde konstant gehalten.

Hierzu wurde als Kühlmedium Heißwasser mit einer Eintrittstemperatur von 172°c im Gegenstrom durch die Kühlmäntel der Reaktionsrohre gepumpt; die Durchflußmenge an Heißwasser betrug 7,4 m³ pro Stunde für die betreffende Kühlsektion.

Das Reaktionsgemisch erreichte in der zweiten Hälfte der Reaktionszone seine Maximaltemperatur von 270°C.

Die Temperaturen über die gesamte Reaktionszone schwankten nur geringfügig. Bei den genannten Reaktionsbedingungen ereigneten sich keine Zersetzungen.

Es wurden 217 kg eines homogenen Ethylen-Butylacrylat-Copolymeren erhalten, das gute Folieneigenschaften aufwies.

Die Analysen zeigten die folgenden Werte:
Schmelzindex 1,36 ± 0,05 g/10 Min.
Dichte 0,9247 g/cm³
Gehalt an normal-Butylacrylat 14,3 ± 0,1 Gew.-%.

### Beispiel 2

Eine Mischung von 1000 Gewichtsteilen Ethylen, 33 Gewichtsteilen tert.-Butylacrylat und 10 Mol-ppm Sauerstoff, bezogen auf Ethylen, wurde in einem Rohrreaktor unter einem Druck von 2250 bar zur Reaktion gebracht.

Das Reaktionsgemisch wurde mit einer Temperatur von 167°C in die Reaktionszone eingeführt.

Der Temperaturanstieg in den ersten zehn Rohren der Reaktionszone wurde bei einem Wert von dT/dt = 2,25°C pro Sekunde konstant gehalten.

Das Kühlmedium (Heißwasser), das durch die Kühlmäntel der Reaktionsrohre gepumpt wurde, hatte eine Temperatur am Eintritt von 176°C. Die Durchflußmenge an Heißwasser betrug 8,3 m³ pro Stunde für die betreffende Kühlsektion. Das Reaktionsgemisch erreichte in der zweiten Hälfte der Reaktionszone seine Maximaltemperatur von 292°C. Die Temperatur über die gesamte Reaktionszone war nur geringen Schwankungen unterworfen. Auch nach einem mehrwöchigen Betrieb war das Reaktionsverhalten noch äußerst stabil. Unter den genannten Reaktionsbedingungen ereigneten sich keine Zersetzungen.

Es wurden 220 kg eines homogenen Mischpolymerisates mit guten Folieneigenschaften erhalten.

Die Analysen zeigten die folgenden Werte:
Schmelzindex 7,4 ± 0,1 g/10 Min.
Dichte 0,9269 g/cm³
Gehalt an tert.-Butylacrylat 6,90 ± 0,05 Gew.-%
Gehalt an freier Acrylsäure 4,05 ± 0,05 Gew.-%.

### Vergleichsbeispiel 1

Wie im Beispiel 1 wurde eine Mischung aus 1000 Gewichtsteilen Ethylen, 32 Gewichtsteilen normal-Butylacrylat, 15 Mol-ppm Sauerstoff, sowie 0,3 Gewichtsteilen Propylen als Polymerisationsregler unter einem Druck von 2300 bar zur Reaktion gebracht. Die Polymerisationsbedingungen stimmten bis auf eine Ausnahme mit denen in Beispiel 1 überein. Im Gegensatz zum Beispiel 1 wurde die Temperaturführung am Eingang zur Reaktionszone nicht bei einem definierten Werte gehalten, d.h. der Quotient dT/dt für das Reaktionsgemisch beim Durchlaufen der ersten zehn Rohre des Reaktors wurde nicht konstant gehalten.

In der zweiten Hälfte der Reaktionszone erreichte das Reaktionsgemisch seine Maximaltemperatur, die zwischen 255 und 298°C schwankte, wobei sich auch die Lage des Temperaturmaximums veränderte und Zersetzungen des Reaktionsgemisches erfolgten.

Es wurden 250 kg Mischpolymerisat mit folgenden Analysenwerten erhalten:
Schmelzindex 1,30 - 1,36 g/10 Min
Dichte 0,9243 g/cm³
Gehalt an normal-Butylacrylat 14,2 - 14,5 Gew.-%.
.

### Vergleichsbeispiel 2

Dem Rohrreaktor wurde wie in Beispiel 2 eine Mischung aus 1000 Gewichtsteilen Ethylen, 33 Gewichtsteilen tert.-Butyl-acrylat und 10 Mol-ppm Sauerstoff, bezogen auf Ethylen, zugeführt und unter einem Druck von 2250 bar polymerisiert.

Bis auf eine AUsnahme waren die Reaktionsbedingungen den in Beispiel 2 angegebenen gleich. In Abänderung zu Beispiel 2 wurde der Temperaturanstieg des Reaktionsgemisches nach seinem Eintritt in die Reaktionszone nicht gezielt bei einem konstanten Wert gehalten.

Das Reaktionsgemisch erreicht in der zweiten Hälfte der Reaktionszone Maximaltemperaturen von 280 bis 296°C.

Es wurden Schwankungen der Temperaturen im gesamten Bereich der Reaktionszone beobachtet, wobei sich auch die Lage des Temperaturmaximums veränderte und sich zeitweilig Zersetzungen des Reaktionsgemisches ereigneten.

Es wurden 225 kg eines Copolymerisates mit folgenden Analysenwerten erhalten:
Schmelzindex 7,45 - 7,60 g/10 Min.
Dichte 0,9273 g/cm³
Gehalt an tert.-Butylacrylat 6,85 - 7,10 Gew.-%
Gehalt an freier Acrylsäure 4,0 - 4,1 Gew.-%.

## Patentansprüche

1. Verfahren zur Herstellung von Copolymerisaten des Ethylens mit Acrylsäureestern durch Copolymerisation von 100 Gewichtsteilen Ethylen mit 0,1 bis 25,0 Gewichtsteilen Acrylsäureestern in einem kontinuierlich betriebenen, rohrförmigen Polymerisationssystem bei Drücken von 500 bis 4000 bar und Temperaturen von 100 bis 400°C in Gegenwart von radikalisch zerfallenden Polymerisationsinitiatoren, dadurch gekennzeichnet, daß die Temperaturführung für das Reaktionsgemisch, bestehend aus Ethylen, Acrylsäureester, Polymerisationsinitiatoren und gegebenenfalls Regler nach dem Eintritt in die Reaktionszone derart gestaltet wird, daß der Quotient dT/dt (Temperaturanstieg pro Zeiteinheit) bei einem Wert zwischen 1,5 und 2,5°C pro Sekunde konstant gehalten wird.

2. Verfahren nach Anspruch 1, dadurch gekennzeichnet, daß bei Einsatz von normal-Butylacrylat der Quotient dT/dt zwischen 1,6 und 1,9°C pro Sekunde eingestellt und konstant gehalten wird.

3. Verfahren nach Anspruch 1, dadurch gekennzeichnet, daß bei Einsatz von tertiär-Butylacrylat der Quotient dT/dt zwischen 1,9 und 2,3°C pro Sekunde eingestellt und konstant gehalten wird.

## Claims

1. A process for preparing copolymers of ethylene with acrylic esters by copolymerizing 100 parts by weight of ethylene with from 0.1 to 25.0 parts by weight of acrylic ester in a continuous tubular polymerization system at from 500 to 4000 bar and from 100 to 400°C in the presence of free radical polymerization initiators, which comprises controlling the temperature for the reaction mixture, comprising ethylene, the acrylic ester, the polymerization initiator and optionally a regulator, after entry into the reaction zone in such a way that the ratio dT/dt (temperature increase per unit time) is kept constant at a value within the range from 1.5 to 2.5°C per second.

2. A process as claimed in claim 1, wherein if n-butyl acrylate is used the ratio dT/dt is set to a value within the range from 1.6 to 1.9°C per second and kept constant at that value.

3. A process as claimed in claim 1, wherein if tertbutyl acrylate is used the ratio dT/dt is set to a value within the range from 1.9 to 2.3°C per second and kept constant at that value.

## Revendications

1. Procédé de préparation de copolymères de l'éthylène et d'esters d'acide acrylique par copolymérisation de 100 parties en poids d'éthylène avec 0,1 à 25,0 parties en poids d'esters d'acide acrylique dans un système de polymérisation tubulaire fonctionnant en continu, sous des pressions de 500 à 4000 bar et à des températures de 100 à 400°C, en présence d'amorceurs de polymérisation à décomposition radicalaire, caractérisé en ce que la régulation de la température pour le mélange réactionnel, composé d'éthylène, d'esters d'acide acrylique, d'amorceurs de polymérisation et éventuellement de régulateurs, après son entrée dans la zone de réaction, est effectuée de sorte que le quotient dT/dt (élévation de la température par unité de temps) soit maintenu constant à une valeur comprise entre 1,5 et 2,5°C par seconde.

2. Procédé selon la revendication 1, caractérisé en ce qu'en cas d'utilisation d'acrylate de n-butyle, le quotient dT/dt est réglé et maintenu constant entre 1,6 et 1,9°C par seconde.

3. Procédé selon la revendication 1, caractérisé en ce qu'en cas d'utilisation d'acrylate de tert.-butyle, le quotient dT/dt est réglé et maintenu constant entre 1,9 et 2,3°C par seconde.
